# EUROPEAN PATENT APPLICATION

(11) **EP 3 165 445 A1**
(43) Date of publication of application: **10.05.2017**
(21) Application number: 15193714.1
(22) Date of filing: 09.11.2015
(51) Int. Cl.: B64C 1/14

(54) **AIRCRAFT DOOR ASSEMBLY**

(71) Applicant: Airbus Operations GmbH, 21129 Hamburg (DE)
(72) Inventor: ERBEN, Johann Konrad, 21129 Hamburg (DE)
(74) Representative: Isarpatent

(57) **Abstract**

A door assembly (10), particularly for doors of passenger aircraft, includes a door frame, a guiding rail (15) mounted at a side edge of the door frame and extending vertically along the door frame, a door having a door body (1), and a latch lever (3). The latch lever (3) has a guiding member (6) attached to a first end portion of the latch lever (3) at a first revolute joint (R1) and a latch lever fulcrum (4) attached to a second end portion of the latch lever at a second revolute joint (R2). The guiding member (6) is received in the guiding rail (15) in a prismatic joint (P1), while the latch lever fulcrum (4) is fixedly connected to the door body (1).

## Description

The present invention relates to a door assembly, specifically for inwardly opening plug-type overhead sliding aircraft doors, for example for use as overwing exits (OWE) in passenger aircraft.

Although the invention is explained and discussed in conjunction with a plug-type overhead sliding aircraft door, the principles of the invention may easily be transferred to other types doors as well, for example coach doors, trolleybus doors or train doors which employ a sliding mechanism to move a door body of the door substantially co-planar to the plane of the door frame to open the door.

Self-sealing doors such as coach doors, trolleybus doors, train doors or aircraft doors may employ so-called plug-type doors which are designed to seal itself in the door frame by taking advantage of a pressure difference, for example between an aircraft cabin on the inside and the atmosphere around the aircraft in flying altitude on the outside. The pressurization forces the door body into the door frame which may be inversely wedge-shaped or which may include stop members at or around the door jamb that match corresponding door stop members arranged around the outer circumference of the door body. The higher pressure on the inside exerts a force onto the seating of the door body within the door frame or onto the bearing surfaces of the corresponding stop members and retains the door within the door frame, preventing the door from springing open until after release of the pressure or other active deployment of the door.

In order to open those doors, the door body may be moved inwardly and then out of the way of the door frame so that unhindered passage through the door frame is possible without the door body blocking the way. The problem with those inwardly opening doors is that the door body needs to be temporarily moved out of the way, necessitating the allocation of some temporary storage space for the door body in the vicinity of the door frame. Additionally, there needs to be a guiding mechanism that allows the door body to be guided between the open and the closed position.

For example, document US 4,375,876 A discloses an overhead sliding aircraft door assembly that allows the door to be moved inwardly, raised upwardly and then stowed out of the way in an overhead position over the door frame in an overhead storage space. The door assembly employs guiding tracks and motion coupling means to guide the door body along a predetermined travel path between an open and a closed position.

There is, however, a need for improvements in inwardly opening door structures, particularly for aircraft, which require less installation space, are more convenient in operation and are able to withstand high loads during movement of the door body.

This need is met by a door assembly having the features of claim 1, an aircraft having the features of claim 9, and a method for operating a door assembly having the features of claim 11.

A first aspect of the disclosure pertains to a door assembly comprising a door frame, a guiding rail mounted at a side edge the door frame and extending vertically along the door frame, a door having a door body, and a latch lever. The latch lever has a guiding member attached to a first end portion of the latch lever at a first revolute joint and a latch lever fulcrum attached to a second end portion of the latch lever at a second revolute joint. The guiding member is received in the guiding rail in a prismatic joint, while the latch lever fulcrum is fixedly connected to the door body.

According to a second aspect of the disclosure, an aircraft comprises a door assembly according to the first aspect of the disclosure, particularly for an overwing exit of the aircraft.

According to a third aspect of the disclosure, a method for operating a door assembly, particularly a door assembly according to the first aspect of the disclosure of an aircraft according to the second aspect of the disclosure, comprises temporarily locking the prismatic joint to hold the guiding member in place relative to the guiding rail, pivoting the latch lever around the first revolute joint to laterally displace the door body out of the door frame, then unlocking the prismatic joint again, and sliding the door body parallel to the door frame upwards by moving the guiding member within the guiding rail.

The idea on which the present invention is based is to provide for a two-stage door opening mechanism which at first enables the door to be displaced inwardly out of the door frame. In a second stage, the inwardly displaced door is then slid upwards along the inner surface of the fuselage out of the way of the door exit, for example into an overhead storage compartment above the door frame. The two-stage mechanism is formed on one hand by a lever acting as linkage between two revolute joints that translate a pivoting motion around one end of the linkage lever that is temporarily kept in place with respect to the door frame into a translatory motion of the door body inwards. On the other hand, the end of the linkage lever that can be locked temporarily with respect to the door frame may be released in a prismatic joint between a guiding member attached to that end of the linkage lever and a guiding rail that allows for the door to be slid upwards in a pure translator motion the direction of which is restrained by the geometry of the guiding rail.

One advantage of this two-stage door opening mechanism consists in the guiding rail being rigidly connected to the door frame, thereby efficiently and reliably securing load transfer of loads acting on the door into the door frame by means of the linkage lever and the guiding member. Most particularly, the mechanical components with the highest load capacity remain stationary with respect to the door frame, so that the movement of the door during inward clearance of the door is very efficiently stabilized.

Additionally, the door assembly provides for an easy-to-operate sliding mechanism for an inward opening door with no need for additional pressure prevention. Due to the inwardly facing translatory motion when clearing the door, the transfer of circumferential loads into the fuselage is advantageously largely avoided. Moreover, both stages of motion (pivoting motion for clearing the door and sliding the door for opening the door) may be power-assisted separately with separate assistance mechanisms. The need to use structurally complex kinematic chains with multiple degrees of freedom in movement is thereby obviated.

Finally, the clearance space required for the two-stage door opening mechanism does not or only minimally penetrate into the cabin space inside an aircraft employing such a door assembly so that the installation and operation of the door assembly may advantageously be implemented in a space-saving manner.

According to an embodiment of the door assembly, the guiding member may comprise a guiding wheel which is configured to be displaced along the guiding rail in a rotary motion around an axis of the first revolute joint. Guiding wheels rolling within guiding rail tracks offer very little friction, thereby reducing the power efforts needed to open the door.

According to another embodiment of the door assembly, an axis of the first revolute joint and an axis of the second revolute joint may be parallel to each other.

According to yet another embodiment of the door assembly, the door assembly may further comprise an overhead storage compartment (OSC) arranged over the door frame which the guiding rail may at least partially extend into. Such OSCs may be integrated into the cabin of a passenger aircraft and covered with interior cabin lining panels to hide the open door from sight.

According to another embodiment of the door assembly, the door assembly may further comprise a fuselage fairing, and a fuselage load bearing beam fixedly attached to the door frame, the guiding rail being mounted to the fuselage load bearing beam and being spaced apart from the fuselage fairing by a clearance distance by means of the fuselage load bearing beam. In such a configuration, the clearance distance may for example be less than the length of the latch lever.

According to another embodiment of the door assembly, the latch lever may extend substantially perpendicularly to an axis of the first revolute joint and an axis of the second revolute joint.

According to another embodiment of the door assembly, the door assembly may further comprise a clutch mechanism coupled to the guiding rail and configured engage with the guiding member to temporarily lock the prismatic joint of the guiding member and the guiding rail.

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. Like reference numerals designate corresponding similar parts.
Fig. 1 schematically illustrates a door body of an aircraft door assembly according to an embodiment of the invention.
Fig. 2 schematically illustrates a top view of two operational states of an inwardly opening aircraft door according to a further embodiment of the invention.
Fig. 3 schematically illustrates a side view of an aircraft door assembly according to a further embodiment of the invention.
Fig. 4 schematically illustrates the side view of the aircraft door assembly of Fig. 3 in an unlatched operational state.
Fig. 5 schematically illustrates the side view of the aircraft door assembly of Fig. 3 in a partially opened operational state.
Fig. 6 schematically illustrates stages of a method for operating an aircraft door assembly according to another embodiment of the invention.
Fig. 7 schematically illustrates an aircraft having at least one aircraft door assembly according to yet a further embodiment of the invention.

In the figures, like reference numerals denote like or functionally like components, unless indicated otherwise. Any directional terminology like "top", "bottom", "left", "right", "above", "below", "horizontal", "vertical", "back", "front", and similar terms are merely used for explanatory purposes and are not intended to delimit the embodiments to the specific arrangements as shown in the drawings.

Although specific embodiments have been illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

The following detailed explanation is directed towards door assemblies for use in aircraft, such as overwing exits (OWE) in passenger aircraft, but the guiding principles of the invention may be used for other applications as well, such as door assemblies for coaches, trolleybuses or trains, either.

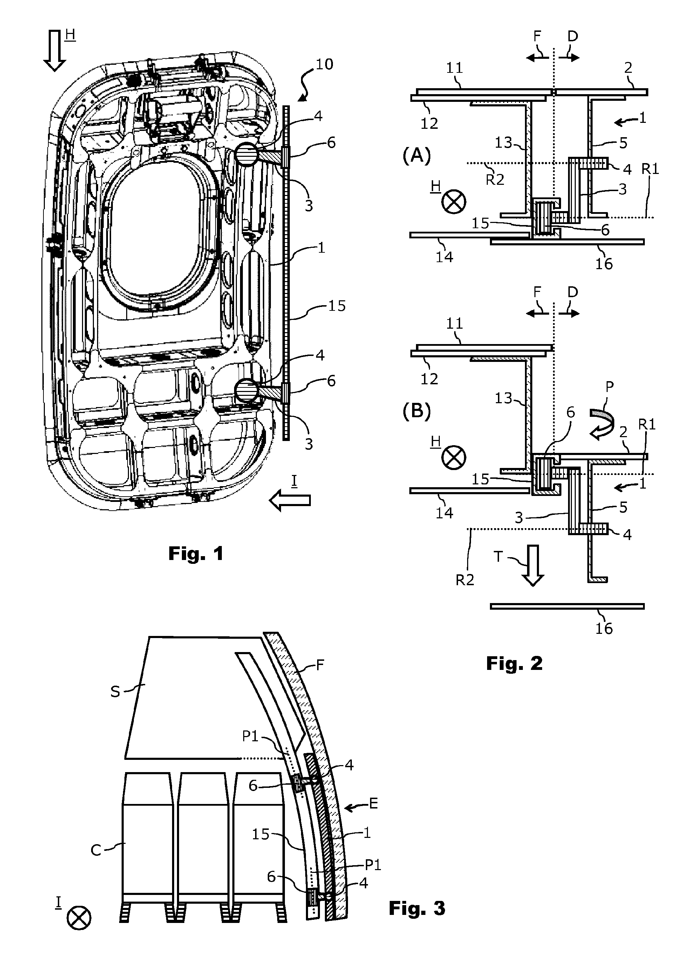

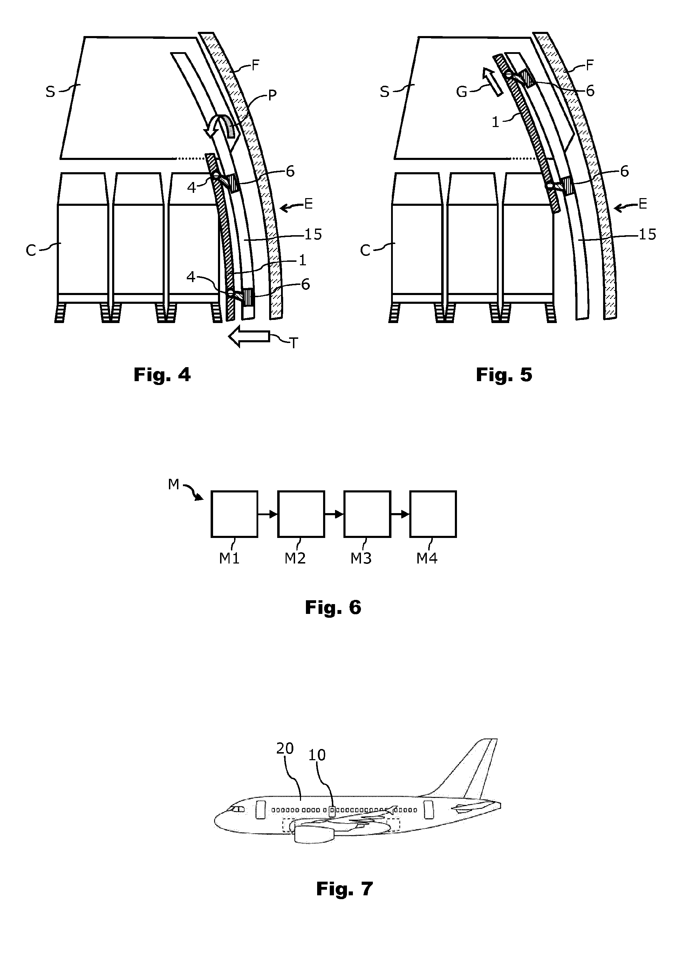

Fig. 1 shows a schematic illustration of a door assembly 10 as it may be employed in an aircraft, particularly a passenger aircraft. The view on the door assembly 10 is exemplarily shown as seen from the inside of a cabin in a passenger aircraft. Fig. 7 exemplarily depicts an aircraft 20 comprising such a door assembly 10 as explained and described in conjunction with Figs. 1 to 5. The door assembly 10 may be used as overwing exit (OWE) in passenger aircraft, but it may be equally possible to equip other exits of the aircraft 20 with the door assemblies 10 as well.

Fig. 2 shows a top view - generally indicated with the reference sign "H" - on a border area between the door frame and the door of Fig. 1. As denoted with the reference signs "F" and "D" in Fig. 2, the left hand side of the illustrations shows the fuselage portion F of the door assembly 10 and the right hand side of the illustrations shows the door portion D of the door assembly 10. The fuselage portion F may include a hull or skin of an aircraft with a fuselage fairing panel 11 on the outside and a fuselage lining panel 12 on the inside of the fuselage. Attached to the fuselage, a fuselage load bearing beam 13 may be attached to the fuselage structure forming the frame or part of the frame of the door. An interior lining panel 14 such as a passenger cabin lining panel 14 may be arranged spaced apart from the hull by the fuselage load bearing beam 13. The lining panel 14 may be part of a cladding structure that hides the functional components of the fuselage from sight and undesired access by passengers.

The door assembly 10 generally includes a door having a door body 1 that is installed in a door frame. As schematically indicated in Fig. 1, the door frame comprises a guiding rail 15 mounted at a side edge the door frame. The guiding rail 15 extends vertically along the door frame, i.e. from the bottom of the door to the top of the door and possibly further ahead over the height of the door body 1. As can be best seen in Fig. 2, the guiding rail 15 may for example be an elongated bar or track with constant U-section along the extension of the rail. Of course, guiding rails 15 may be formed on both sides of the door body 1 and the door frame, respectively, but in Fig. 1 only a single guiding rail 15 is depicted for reasons of lucidity.

A guiding member 6 is inserted into the guiding rail 15. In order to secure the guiding member against slipping out of the guiding rail 15 perpendicular to the extension of the guiding rail 15, the U-section of the rail may be formed with inwardly folded end flanges that secure the guiding member 6 within the guiding rail 15. The guiding member 6 and the guiding rail 15 together form a prismatic joint P1, i.e. the guiding member 6 is received in the guiding rail 15 and movable relative to the guiding rail 15 only in the direction of extension of the rail. The guiding member 6 may for example comprise a guiding wheel 6 which is configured to be displaced along the guiding rail 15 in a rotary motion.

A latch lever 3 is attached to the guiding member 6 at a first end portion thereof to form first revolute joint R1, i.e. the latch lever 3 may be rotated in a pivoting motion around an axis perpendicular to the extension of the guiding rail 15. A latch lever fulcrum 4 is attached to a second end portion of the latch lever 3, opposite to the first end portion. The latch lever fulcrum 4 and the latch lever form a second revolute joint R2 so that the latch lever 3 may be rotated in a pivoting motion around an axis perpendicular to the extension of the door body 1. The latch lever fulcrum 4 may for example be a pin or bolt that is fixedly connected to the door body 1, for example in a door load bearing beam 5 to which a door lining panel 16 is fixed and spaced apart from the door fairing 2.

Fig. 2 depicts two scenarios (A) and (B) of operational states of the door assembly 10: In the first operational state of scenario (A), the door body 1 is fully inserted into the door frame and may be considered as being in a locked state. In the second operational state of scenario (B), the door body 1 is partially unlatched and cleared from the door frame in an inward displacement.

The latch lever fulcrum 4, the latch lever 3 and the guiding member 6 together form a crank mechanism that enables a pivoting movement P of the latch lever 3 around an axis of the first revolute joint R1. When the axis of the first revolute joint R1 and the axis of the second revolute joint R2 are parallel to each other and the latch lever 3 extends substantially perpendicularly to the axes of the first and second revolute joints R1 and R2, the pivoting movement P1 of the latch lever 3 will result in lifting the door body 1 and translating it into a translatory motion T of the door body 1 in an inwardly facing direction of the door assembly, as indicated by the arrow in Fig. 2(B). The a fuselage load bearing beam 13 that fixedly attached to the door frame defines a clearance distance that equals to a distance over which the fuselage fairing 11 is spaced apart from the guiding rail 15. This clearance distance should be less than the length of the latch lever 3, so that the latch lever 3 and the remaining latching components may be fully hidden behind the interior door lining 16 in the locked state of the door.

In order to have the cleared door stowed away from the door frame and to vacate an exit E through the door frame, the door body 1 may be guided in a substantially linear motion away from the door frame. To that end, Figs. 3, 4 and 5 depict three different stages for the movement of the door from the closed state into a stowage position. Fig. 3 shows the locked and closed door in a side view, generally denoted with the reference sign "I". After the initial lift of the door body 1 and the translatory inward motion of the door body 1, Fig. 4 illustrates the cleared operational state of the door assembly. Finally, Fig. 5 illustrates an operational state of the door assembly where the door body 1 has been slid upwards along the guiding rail(s) 15 towards a stowage position, for example in an overhead stowage compartment (OSC), generally indicated with the reference sign "S". The inside of the cabin may contain cabin equipment C, such as for example passenger seats. The fuselage section with the door frame is generally denoted with the reference sign "F".

The OSC S may be arranged over the door frame and the guiding rail 15 may at least partially extend into the OSC S so that the door body 1 may be fully or at least partially received within the OSC S to fully unblock the exit E through the door frame and to hide the door body 1 from sight and unwarranted access in the open state.

During aforementioned pivoting motion P around the first revolute joint R1, i.e. to bring the door assembly from the closed operational state in Fig. 3 to the cleared operational state in Fig. 4, the guiding member 6 should be kept in place relative to the guiding rail 15. To that end, a clutch mechanism may be coupled to the guiding rail 15. This clutch mechanism may be configured to engage with the guiding member 6 to temporarily lock the prismatic joint P1 of the guiding member 6 and the guiding rail 15. For example, the clutch mechanism may include a retractable pin that may be extended through a hole in the guiding rail 15 into an axial bearing of the guiding member 6 to interlock the guiding rail 15 and the guiding member 6. Alternatively, it may be possible to block the vertical movement of the guiding member 6 within the guiding rail 15 by stop elements that may be extended into the channel of the guiding rail 15 in front of and behind the guiding member 6.

When the door body 1 has been cleared, the clutch mechanism may be released and the guiding member 6 may freely be translated along the guiding rail 15, as indicated by the reference sign "G". During this motion, the revolute joints R1 and R2 of the latch lever 3 with the latch lever fulcrum 4 and the guiding member 6 may be blocked, instead to prevent a swaying motion of the door body 1 relative the door frame. As shown in Fig. 5, the door body 1 may be slid upwards into the OSC S along the guiding rails(s) 15.

Both the pivoting movement P as well as the translatory motion G may be power-assisted by an appropriate powertrain, for example a hydraulic, pneumatic or electric powertrain. Fig. 6 schematically illustrates stages of a method M for operating a door assembly, for example a door assembly 10 as explained in conjunction with Figs. 1 to 5. The method M may be specifically used for operating door assemblies 10 on board of an aircraft, such as the aircraft 20 as depicted in Fig. 7. The method M may in particular be used to open a closed door of a door assembly 10.

In a first stage M1, the method M involves temporarily locking the prismatic joint P1 to hold the guiding member 6 in place relative to the guiding rail 15, for example by means of a clutch mechanism fixed to the guiding rail 15. Once the guiding member 6 is locked in place, the latch lever 3 may be pivoted in a second stage M2 around the first revolute joint R1. This entails a lateral and inward displacement T of the door body 1 out of the door frame. Once the door body 1 is cleared from the door frame, the method M involves unlocking the prismatic joint P1 in a stage M3. Finally, in the fourth stage M4, the door body 1 may be slid parallel to the door frame upwards by moving the guiding member 6 within the guiding rail 15. For example, the guiding member 6 may be a guiding wheel 6 that may be rolled in the channel formed by the guiding rail 15 to perform a translatory motion G of the door body 1.

In the foregoing detailed description, various features are grouped together in one or more examples or examples with the purpose of streamlining the disclosure. It is to be understood that the above description is intended to be illustrative, and not restrictive. It is intended to cover all alternatives, modifications and equivalents. Many other examples will be apparent to one skilled in the art upon reviewing the above specification.

The embodiments were chosen and described in order to best explain the principles of the invention and its practical applications, to thereby enable others skilled in the art to best utilize the invention and various embodiments with various modifications as are suited to the particular use contemplated. In the appended claims and throughout the specification, the terms "including" and "in which" are used as the plain-English equivalents of the respective terms "comprising" and "wherein," respectively. Furthermore, "a" or "one" does not exclude a plurality in the present case.

### List of reference numerals and signs

- 1: Door body
- 2: Door fairing
- 3: Latch lever
- 4: Latch lever fulcrum
- 5: Door load bearing beam
- 6: Guiding member
- 10: Door assembly
- 11: Fuselage fairing
- 12: Fuselage lining
- 13: Fuselage load bearing beam
- 14: Cabin lining
- 15: Guiding rail
- 16: Door lining
- 20: Aircraft
- C: Cabin equipment
- D: Door portion
- E: Exit area
- F: Fuselage portion
- G: Guiding motion
- H: Top viewing direction
- I: Side viewing direction
- P: Pivoting motion
- P1: Prismatic joint
- M: Method
- M1: Method step
- M2: Method step
- M3: Method step
- M4: Method step
- R: Guiding member axis
- R1: First revolute joint
- R2: Second revolute joint
- S: Overhead storage compartment
- T: Translatory motion

## Claims

1. Door assembly (10), comprising:
a door frame;
a guiding rail (15) mounted at a side edge the door frame and extending vertically along the door frame;
a door having a door body (1); and
a latch lever (3) having a guiding member (6) attached to a first end portion of the latch lever (3) at a first revolute joint (R1) and a latch lever fulcrum (4) attached to a second end portion of the latch lever (3) at a second revolute joint (R2),
wherein the guiding member (6) is received in the guiding rail (15) in a prismatic joint (P1) and the latch lever fulcrum (4) is fixedly connected to the door body (1).

2. Door assembly (10) according to claim 1, wherein the guiding member (6) comprises a guiding wheel (6) which is configured to be displaced along the guiding rail (15) in a rotary motion around an axis of the first revolute joint (R1).

3. Door assembly (10) according to one of the claims 1 and 2, wherein an axis of the first revolute joint (R1) and an axis of the second revolute joint (R2) are parallel to each other.

4. Door assembly (10) according to one of the claims 1 to 3, further comprising:
an overhead storage compartment (S) arranged over the door frame,
wherein the guiding rail (15) at least partially extends into the overhead storage compartment (S).

5. Door assembly (10) according to one of the claims 1 to 4, further comprising:
a fuselage fairing (11); and
a fuselage load bearing beam (13) fixedly attached to the door frame, the guiding rail (15) being mounted to the fuselage load bearing beam (13) and being spaced apart from the fuselage fairing (11) by a clearance distance by means of the fuselage load bearing beam (13).

6. Door assembly (10) according to claim 5, wherein the clearance distance is less than the length of the latch lever (3).

7. Door assembly (10) according to one of the claims 1 to 6, wherein the latch lever (3) extends substantially perpendicularly to an axis of the first revolute joint (R1) and an axis of the second revolute joint (R2).

8. Door assembly (10) according to one of the claims 1 to 7, further comprising:
a clutch mechanism coupled to the guiding rail (15) and configured to engage with the guiding member (6) to temporarily lock the prismatic joint (P1) of the guiding member (6) and the guiding rail (15).

9. Aircraft (20), comprising an aircraft door with a door assembly (10) according to one of the claims 1 to 8.

10. Aircraft (20) according to claim 9, wherein the aircraft door is an overwing exit.

11. Method (M) for operating a door assembly (10), the door assembly (10) comprising:
a door frame;
a guiding rail (15) mounted at a side edge the door frame and extending vertically along the door frame;
a door having a door body (1); and
a latch lever (3) having a guiding member (6) attached to a first end portion of the latch lever (3) at a first revolute joint (R1) and a latch lever fulcrum (4) attached to a second end portion of the latch lever (3) at a second revolute joint (R2), the guiding member (6) being received in the guiding rail (15) in a prismatic joint (P1) and the latch lever fulcrum (4) being fixedly connected to the door body (1),
the method comprising:
temporarily locking (M1) the prismatic joint (P1) to hold the guiding member (6) in place relative to the guiding rail (15);
pivoting (M2) the latch lever (3) around the first revolute joint (R1) to laterally displace the door body (1) out of the door frame;
unlocking (M3) the prismatic joint (P1); and
sliding (M4) the door body (1) parallel to the door frame upwards by moving the guiding member (6) within the guiding rail (15).
